# EUROPÄISCHE PATENTSCHRIFT

(11) **EP 1 238 211 B1**
(45) Veröffentlichungstag und Bekanntmachung des Hinweises auf die Patenterteilung: **21.05.2003**
(21) Anmeldenummer: 00987246.6
(22) Anmeldetag: 15.11.2000
(51) Int. Cl.: F16H 25/22

(54) **KUGELGEWINDETRIEB**
BALL SCREW
VIS D'ENTRAINEMENT A BILLES

(30) Priorität: 17.12.1999 DE 19960938; 14.03.2000 DE 10012231
(43) Veröffentlichungstag der Anmeldung: 11.09.2002
(73) Patentinhaber: INA-Schaeffler KG, 91074 Herzogenaurach (DE)
(72) Erfinder: ZERNICKEL, Alexander, 91074 Herzogenaurach (DE); FLEISCHHAUER, Rolf, 90765 Fürth (DE)
(86) Internationale Anmeldenummer: EP0011266
(87) Internationale Veröffentlichungsnummer: WO01044689

(56) Entgegenhaltungen:
- GB-A- 891 025
- US-A- 2 924 113
- US-A- 3 009 367

## Beschreibung

### Gebiet der Erfindung

Die Erfindung betrifft einen Kugelgewindetrieb mit einer Spindel und einer diese umgebenden Mutter sowie mit dazwischen angeordneten Kugeln, welche in einer an der Spindel ausgebildeten Gewindebahn und in entsprechenden Gewindebahnen abrollbar angeordnet sind, die an innerhalb der Mutter angeordneten Ringen ausgebildet sind, wobei die Gewindebahn jeweils eines der in der Mutter befindlichen Ringe einen Umlenkbereich für die Rückführung der Kugeln von einem Auslaufende einer gemeinsamen Windung der Gewindebahnen zu einem Einlaufende dieser Windung aufweist, und wobei an den in der Mutter angeordneten Ringen jeweils eine Gewindebahn an einer Stirnseite ausgebildet ist und die Gewindebahnen zweier benachbarter Ringe gemeinsam mit der Gewindebahn der Spindel einen endlosen Umlaufkanal für die Kugeln begrenzen.

### Hintergrund der Erfindung

Kugelgewindetriebe dienen der Umwandlung einer rotatorischen Bewegung in eine translatorische Bewegung und finden beispielsweise Anwendung im Kraftfahrzeugbereich bei der Lenksäulenverstellung, der Drosselklappenverstellung, der Gangschaltung oder der elektrischen Türverriegelung. Aus der Druckschrift DE 33 23 345 A1 ist ein Kugelgewindetrieb bekannt, bei dem in einem Mutternkörper zwei Profilringe nebeneinanderliegend angeordnet sind. Diese sind jeweils zweistückig hergestellt, wobei von einem Ring jeweils die beiden Profilringteile endseitig stumpf aneinanderstoßen. Zwischen zwei einen Rückleitungskanal bildenden Abschnitten der beiden Teile eines Profilringes befindet sich ein Spalt. Daher ergeben sich bei dieser Ausführung komplizierte Konturen. Die beiden Profilringe sind in dem Mutternkörper dadurch fixiert, dass sie eingegossen oder eingespritzt sind.

Aus der gattungsgemässen Druckschrift US 2,924,113 A ist ein Kugelgewindetrieb der eingangs genannten Art bekannt, bei dem in einem Muttemgehäuse zwei Ringe angeordnet sind, die jeweils aus mehreren Teilen zusammengesetzt sind. Jeder Ring besteht aus einer äußeren Scheibe, einer inneren Scheibe, einem Radialflansch und einer rohrförmigen Wand. Diese Teile bilden gemeinsam mit dem Muttemgehäuse eine geschlossene Kammer, welche mit Gummi ausgefüllt ist. Die Druckschrift US 3,009, 367 A zeigt einen Kugelgewindetrieb, der aus sehr vielen Einzelteilen besteht, die in aufwendiger Weise montiert werden müssen. Hier handelt es sich um eine teuere Kombination aus spangebend und spanlos hergestellten Einzelteilen, so dass dieser Gewindetrieb wahrscheinlich sehr teuer ist.

### Zusammenfassung der Erfindung

Der Erfindung liegt die Aufgabe zu Grunde, einen Kugelgewindetrieb zu schaffen, der einen hohen Wirkungsgrad aufweist und einfach herstellbar sowie leicht zu montieren und zu demontieren ist. Dabei soll eine solche Vorschubvorrichtung eine sanfte Umlenkung der Kugeln bei geringer Reibung ermöglichen.

Diese Aufgabe wird nach einem ersten Vorschlag erfindungsgemäß dadurch gelöst, dass einer der in der Mutter angeordneten Ringe als Umlenkkäfig ausgebildet ist, der an seinen beiden Stirnseiten Gewindebahnen mit Umlenkbereichen aufweist.

Nach einem weiteren Vorschlag weist die Mutter erfindungsgemäß einen als Ring wirkenden, mit einer Gewindebahn versehenen Hülsenbord auf, wobei innerhalb der Mutter ein mit einer Gewindebahn versehener Einsatzring axial neben dem ringförmigen Hülsenbord angeordnet ist.

Schließlich ist nach einem dritten Vorschlag die Mutter erfindungsgemäß eine dünnwandige, spanlos hergestellte Hülse, welche einen umgebördelten die Hülse schließenden und eine Spieleinstellung bzw. Vorspannung des Kugelgewindetriebes bewirkenden Hülsenbord aufweist, wobei die in der Mutter angeordneten Ringe zwei als geprägte Scheiben ausgeführte Einsatzringe sind.

infolge der erfindungsgemäßen Lösungen werden für den Kugelgewindetrieb nur wenige Einzelteile verwendet, welche kostengünstig durch spanlose Bearbeitung hergestellt werden können. Bei optimaler Ausführung besteht der Kugelgewindetrieb aus der spanlos hergestellten Hülse mit einem integrierten, spanlos geformten Laufbahnteil, dem spanlos hergestellten Einsatzring mit dem zweiten Laufbahnteil, den Kugeln und der ebenfalls spanlos hergestellten Spindel mit einem weiteren Laufbahnteil.

Bei einem Ausführungsbeispiel des Gewindetriebes wird durch Einlegen des Einsatzringes in die Hülse und einen anschließenden Bördelvorgang die Mutter fertig gestellt. Zwischen dem umgebördelten Hülsenbord und dem Einsatzring kann ein Federelement angeordnet werden, um eine definierte Vorspannung auf den Kugelverband zu bringen und diesen als Wälzlager ausgebildeten Gewindetrieb spielfrei zu machen. Das Federelement kann von einem Ring aus einem elastisch verformbaren Werkstoff gebildet sein.

Einer der in der Mutter eingesetzten Ringe kann als Umlenkkäfig ausgebildet sein, der an seinen beiden Stirnseiten Gewindebahnen mit Umlenkbereichen aufweist. Der Umlenkkäfig kann innerhalb der Mutter axial neben einem mit einer Gewindebahn versehenen Einsatzring angeordnet sein. Es ist dabei auch möglich, den Umlenkkäfig mit seinem anderen axialen Ende innerhalb der Mutter neben einem mit einer Gewindebahn versehenen Hülsenbord der Mutter anzuordnen.

Ein solcher Kugelgewindetrieb weist nur zwei endlose Umlaufkanäle für Kugeln auf. Innerhalb der Mutter ist der Umlenkkäfig in dem Zwischenraum zwischen dem Einsatzring und dem von dem Einsatzring abgewandten Hülsenbord angeordnet und erzeugt mit den Umlenkbereichen seiner Gewindebahnen eine sanfte Umlenkung der Kugeln. Über einen der Hülsenborde der als Hülse ausgebildeten Mutter ist der Kugelgewindetrieb spieleinstellbar. Im Bereich dieses Hülsenbordes kann für die spielfreie Führung auch eine Feder eingesetzt werden. Mit dem einstellbaren Hülsenbord bzw. mit der Feder wird der Aufbau toleranzunabhängig.

### Kurze Beschreibung der Zeichnung

Ausführungsbeispiele der Erfindung sind in der Zeichnung dargestellt und werden im folgenden näher beschrieben. Es zeigen
- Figur 1: einen Kugelgewindetrieb im Längsschnitt;
- Figur 2: eine mantelseitige Ansicht eines Umlenkkäfigs des Kugelgewindetriebs;
- Figur 3: eine stimseitige Ansicht des Umlenkkäfigs;
- Figur 4: einen Längsschnitt durch den Umlenkkäfig gemäß Linie IV-IV der Figur 3;
- Figur 5: einen abgewandelten Kugelgewindetrieb im Längsschnitt;
- Figur 6: einen Kugelgewindetrieb in einer weiteren Ausführungsform, teilweise im Längsschnitt und teilweise in der Seitenansicht;
- Figur 7: einen Einsatzring des Kugelgewindetriebes nach Figur 6, teilweise im Längsschnitt und teilweise in der Seitenansicht;
- Figur 8: den Einsatzring nach Figur 7 in stirnseitiger Ansicht;
- Figur 9: einen Kugelgewindetrieb wie in Figur 6, jedoch mit einem zusätzlich eingesetzten Federelement.

### Ausführliche Beschreibung der Zeichnung

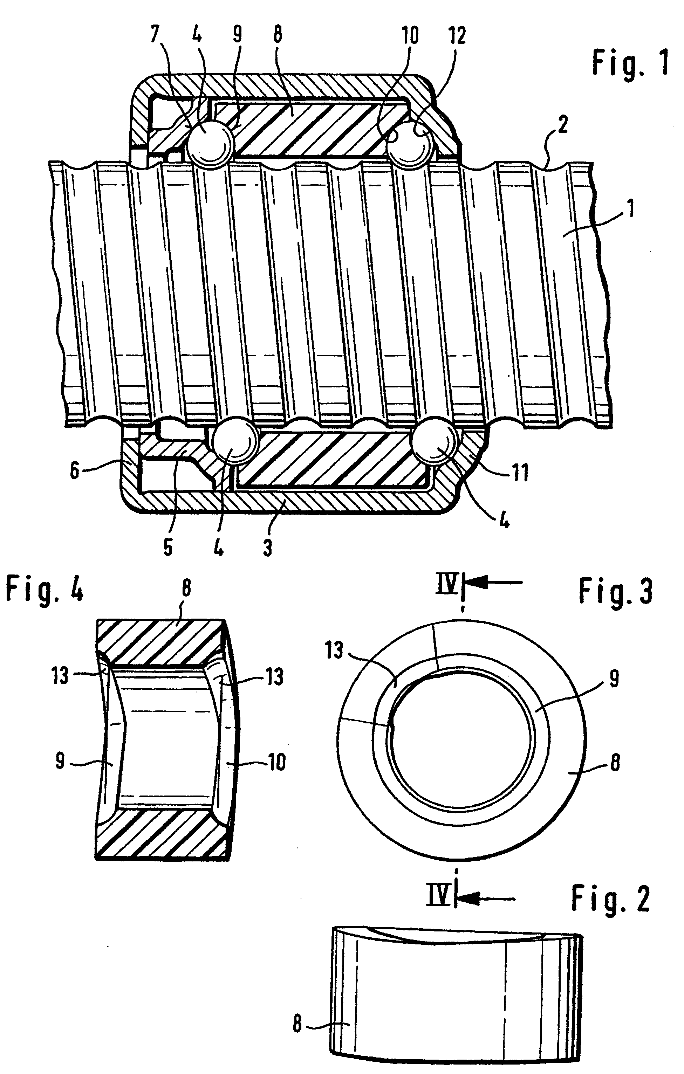

Ein erfindungsgemäßer Kugelgewindetrieb nach den Figuren 1 bis 4 ist an einer Spindel 1 angeordnet, die an ihrer Mantelfläche eine Gewindebahn 2 aufweist. Eine hülsenförmige Mutter 3 umgibt konzentrisch die Spindel 1 und enthält Kugeln 4, die an der Gewindebahn 2 der Spindel 1 abrollen können. Die Kugeln 4 sind in zwei endlosen Umläufen in der Mutter 3 abrollbar gehalten. Hierzu dient ein in der Mutter 3 eingesteckter Einsatzring 5, der sich axial an einem Hülsenbord 6 der Mutter 3 abstützt. Der Einsatzring 5 ist an seiner von dem Hülsenbord 6 abgewandten Stirnseite mit einer Gewindebahn 7 für die Kugeln 4 versehen. An dem Einsatzring 5 schließt sich innerhalb der Mutter 3 axial ein Umlenkkäfig 8 an, der an seiner auf den Einsatzring 5 weisenden Stirnseite eine Gewindebahn 9 aufweist. Die Gewindebahn 7 des Einsatzringes 5 und die Gewindebahn 9 des Umlenkkäfigs 8 sind so angeordnet, dass sie gemeinsam mit der Gewindebahn 2 der Spindel 1 einen endlosen Kanal für die Kugeln 4 begrenzen.

An seinem von dem Einsatzring 5 abgewandten Ende weist der Umlenkkäfig 8 ebenfalls eine stimseitige Gewindebahn 10 auf. Er wird hier von einem Hülsenbord 11 axial in der Mutter 3 gehalten, der ebenfalls mit einer Gewindebahn 12 versehen ist, wobei die Gewindebahn 10 des Umlenkkäfigs 8 und die Gewindebahn 12 des Hülsenbordes 11 so angeordnet sind, dass sie gemeinsam mit der Gewindebahn 2 der Spindel 1 einen weiteren endlosen Umlaufkanal für die Kugeln 4 bilden.

Die Gewindebahnen 9 und 10 des Umlenkkäfigs 8 sind auf einem Teil ihres Umfanges mit Umlenkbereichen 13 versehen. Die Kugeln 4 gelangen am Ende einer Windung der Gewindebahn 2 der Spindel 1 über den jeweiligen Umlenkbereich 13 zurück an den Anfang dieser Windung.

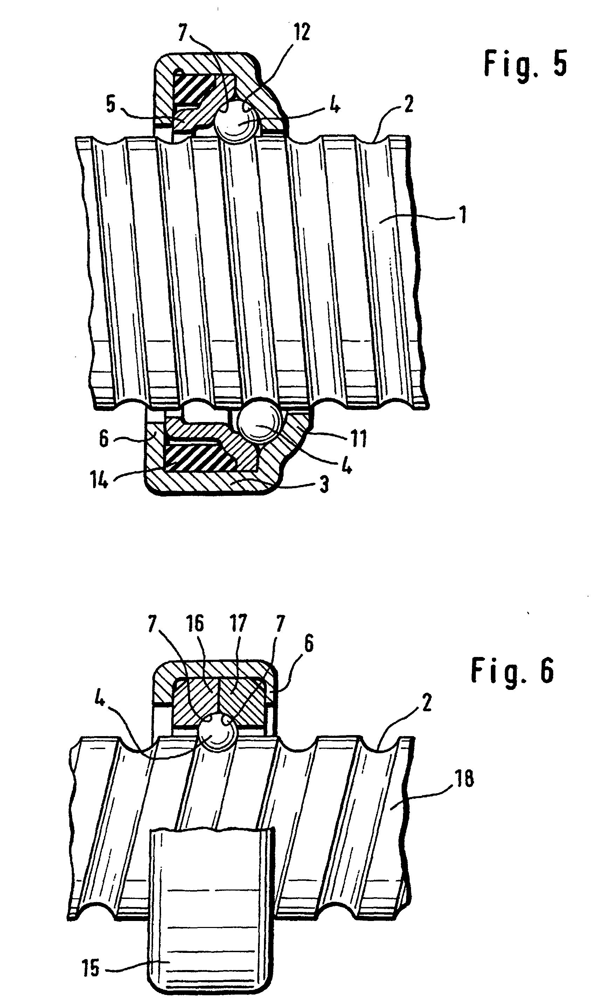

Ein in Figur 5 dargestellter erfindungsgemäßer Kugelgewindetrieb ist ebenfalls an einer Spindel 1 angeordnet, die an ihrer Mantelfläche eine Gewindebahn 2 aufweist. Eine hülsenförmige Mutter 3 umgibt die Spindel 1 konzentrisch und enthält Kugeln 4, die an der Gewindebahn 2 der Spindel 1 abrollen können. Die Kugeln 4 sind in einem endlosen Umlauf in der Mutter 3 abrollbar gehalten. Hierzu dient ein in der Mutter 3 eingesteckter Einsatzring 5, der sich axial an einem Hülsenbord 6 der Mutter 3 abstützen kann. Der Einsatzring 5 ist an seiner von dem Hülsenbord 6 abgewandten Stirnseite mit einer Gewindebahn 7 für die Kugeln 4 versehen. Er stützt sich innerhalb der Mutter 3 axial an einem weiteren Hülsenbord 11 der Mutter 3 ab, welcher ebenfalls mit einer Gewindebahn 12 versehen ist. Die Gewindebahn 7 des Einsatzringes 5 und die Gewindebahn 12 des Hülsenbordes 11 sind so angeordnet, dass sie gemeinsam mit der Gewindebahn 2 der Spindel 1 einen endlosen Umlaufkanal für die Kugeln 4 bilden. Der Einsatzring 5 st auf einem Teil seines Umfanges mit einem Umlenkbereich versehen. Die Kugeln 4 gelangen am Ende einer Windung der Gewindebahn 2 der Spindel 1 über den Umlenkbereich zurück an den Anfang dieser Windung. Zwischen dem Einsatzring 5 und den Hülsenborden 6 und 11 der Mutter 3 ist in diesem Fall ein Spalt vorzusehen.

Nach dem Einsatzring 5 kann in die Mutter 3 zusätzlich ein Federelement 14 eingelegt werden, bevor die Mutter 3 an ihrem von dem Hülsenbord 11 abgewandten axialen Ende umgebördelt wird, um den Hülsenbord 6 zu bilden. Der Hülsenbord 6 und das Federelement 14 dienen gemeinsam der Erzeugung einer definierten Vorspannung in dem Kugelgewindetrieb.

Bei den in den Figuren 6 bis 9 dargestellten Ausführungsbeispielen sind in der Mutter 15 jeweils zwei Einsatzringe 16 und 17 mit Gewindebahnen 7 angeordnet, die als geprägte Scheiben ausgeführt sein können und gemeinsam mit der Gewindebahn 2 einer zugehörigen Spindel 18 einen endlosen Umlaufkanal für die Kugeln 4 bilden. Hierfür weist jeder Einsatzring 16 einen Tragbereich 19 und einen Umlenkbereich 20 auf.

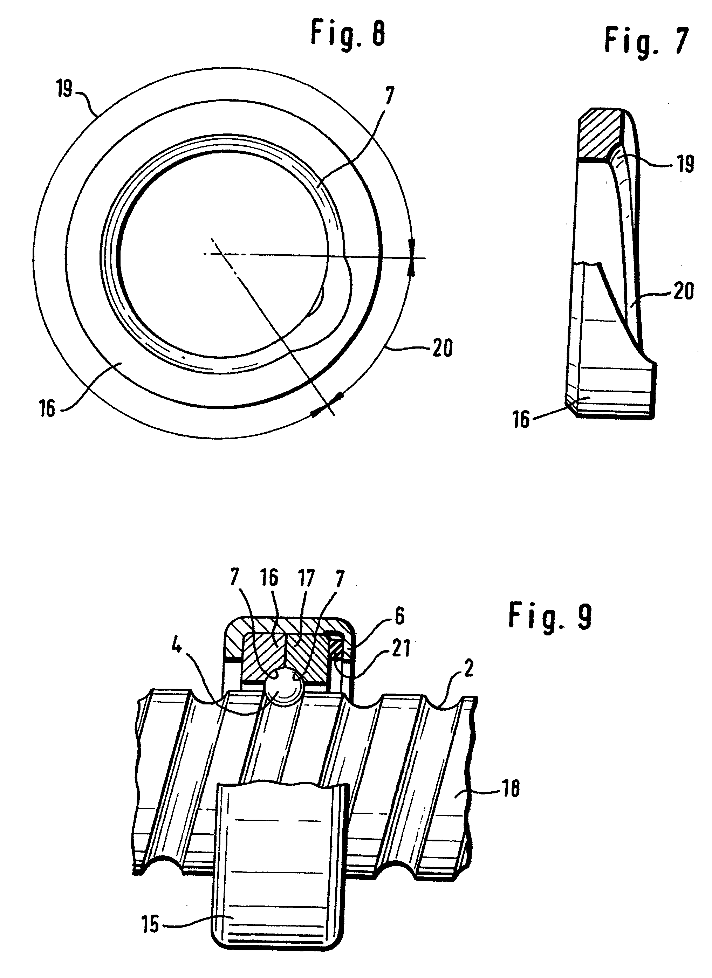

Bei dem Gewindetrieb nach Figur 6 liegt der die Mutter 15 verschließende umgebördelte Hülsenbord 6 unmittelbar an dem Einsatzring 17 an, während in Figur 9 zwischen den Hülsenbord 6 und dem Einsatzring 17 ein ringförmiges Federelement 21 aus einem elastischen Werkstoff zur Ausübung einer Vorspannung in dem Gewindetrieb angeordnet ist.

### Bezugszahlenliste

- 1: Spindel
- 2: Gewindebahn
- 3: Mutter
- 4: Kugel
- 5: Einsatzring
- 6: Hülsenbord
- 7: Gewindebahn
- 8: Umlenkkäfig
- 9: Gewindebahn
- 10: Gewindebahn
- 11: Hülsenbord
- 12: Gewindebahn
- 13: Umlenkbereich
- 14: Federelement
- 15: Mutter
- 16: Einsatzring
- 17: Einsatzring
- 18: Spindel
- 19: Tragbereich
- 20: Umlenkbereich
- 21: Federelement

## Patentansprüche

1. Kugelgewindetrieb mit einer Spindel (1) und einer diese umgebenden Mutter (3) sowie mit dazwischen angeordneten Kugeln (4), welche in einer an der Spindel (1) ausgebildeten Gewindebahn (2) und in entsprechenden Gewindebahnen (7, 9, 10, 12) abrollbar angeordnet sind, die an innerhalb der Mutter (3) angeordneten Ringen ausgebildet sind, wobei die Gewindebahn (7, 9, 10, 12) jeweils eines der in der Mutter (3) befindlichen Ringe einen Umlenkbereich (13) für die Rückführung der Kugeln (4) von einem Auslaufende einer gemeinsamen Windung der Gewindebahnen (2, 7, 9, 10, 12) zu einem Einlaufende dieser Windung aufweist, und wobei an den in der Mutter (3) angeordneten Ringen jeweils eine Gewindebahn (7, 9, 10, 12) an einer Stirnseite ausgebildet ist und die Gewindebahnen (7, 9 bzw. 10, 12) zweier benachbarter Ringe gemeinsam mit der Gewindebahn (2) der Spindel (1) einen endlosen Umlaufkanal für die Kugeln (4) begrenzen, **dadurch gekennzeichnet, dass** einer der in der Mutter (3) angeordneten Ringe als Umlenkkäfig (8) ausgebildet ist, der an seinen beiden Stirnseiten Gewindebahnen (9, 10) mit Umlenkbereichen (13) aufweist.

2. Gewindetrieb nach Anspruch 1, **dadurch gekennzeichnet, dass** der Umlenkkäfig (8) innerhalb der Mutter (3) axial neben einem mit einer Gewindebahn (7) versehenen Einsatzring (5) angeordnet ist.

3. Gewindetrieb nach Anspruch 1, **dadurch gekennzeichnet, dass** der Umlenkkäfig (8) innerhalb der Mutter (3) axial neben einem mit einer Gewindebahn (12) versehenen Hülsenbord (11) der Mutter (3) angeordnet ist.

4. Kugelgewindetrieb mit einer Spindel (1) und einer diese umgebenden Mutter (3) sowie mit dazwischen angeordneten Kugeln (4), welche in einer an der Spindel (1) ausgebildeten Gewindebahn (2) und in entsprechenden Gewindebahnen (7, 12) abrollbar angeordnet sind, die an innerhalb der Mutter (3) angeordneten Ringen ausgebildet sind, wobei die Gewindebahn (7, 12) jeweils eines der in der Mutter (3) befindlichen Ringe einen Umlenkbereich für die Rückführung der Kugeln (4) von einem Auslaufende einer gemeinsamen Windung der Gewindebahnen (2, 7, 12) zu einem Einlaufende dieser Windung aufweist, und wobei an den in der Mutter (3) angeordneten Ringen jeweils eine Gewindebahn (7, 12) an einer Stirnseite ausgebildet ist und die Gewindebahnen (7, 12) zweier benachbarter Ringe gemeinsam mit der Gewindebahn (2) der Spindel (1) einen endlosen Umlaufkanal für die Kugeln (4) begrenzen, **dadurch gekennzeichnet, dass** die Mutter (3) einen als Ring wirkenden, mit einer Gewindebahn (12) versehenen Hülsenbord (11) aufweist, wobei innerhalb der Mutter (3) ein mit einer Gewindebahn (7) versehener Einsatzring (5) axial neben dem ringförmigen Hülsenbord (11) angeordnet ist.

5. Gewindetrieb nach Anspruch 4, **dadurch gekennzeichnet, dass** die Mutter (3,) eine dünnwandige, spanlos hergestellte Hülse ist, welche einen umgebördelten, die Hülse schließenden und eine Spieleinstellung bzw. Vorspannung des Kugelgewindetriebes bewirkenden Hülsenbord (6) aufweist, wobei in der Mutter (3) zwischen dem umgebördelten Hülsenbord (6) und dem Einsatzring (5) ein Federelement (14) angeordnet ist.

6. Kugelgewindetrieb mit einer Spindel (18) und einer diese umgebenden Mutter (15) sowie mit dazwischen angeordneten Kugeln (4), welche in einer an der Spindel (18) ausgebildeten Gewindebahn (2) und in entsprechenden Gewindebahnen (7) abrollbar angeordnet sind, die an innerhalb der Mutter (15) angeordneten Ringen ausgebildet sind, wobei die Gewindebahn (7) jeweils eines der in der Mutter (15) befindlichen Ringe einen Umlenkbereich (20) für die Rückführung der Kugeln (4) von einem Auslaufende einer gemeinsamen Windung der Gewindebahnen (7) zu einem Einlaufende dieser Windung aufweist, und wobei an den in der Mutter (15) angeordneten Ringen jeweils eine Gewindebahn (7) an einer Stirnseite ausgebildet ist und die Gewindebahnen (7, 7) zweier benachbarter Ringe gemeinsam mit der Gewindebahn (2) der Spindel (18) einen endlosen Umlaufkanal für die Kugeln (4) begrenzen, wobei die Mutter (15) eine dünnwandige, spanlos hergestellte Hülse ist, welche einen umbördelten, die Hülse schließenden und eine Spieleinstellung bzw. Vorspannung des Kugelgewindetriebes bewirkenden Hülsenbord (6) aufweist, **dadurch gekennzeichnet, dass** die in der Mutter (15) angeordneten Ringe zwei als geprägte Scheiben ausgeführte Einsatzringe (16, 17) sind.

7. Gewindetrieb nach Anspruch 6, **dadurch gekennzeichnet, dass** in der Mutter (15) zwischen dem umgebördelten Hülsenbord (6) und einem Einsatzring (17) ein Federelement (21) angeordnet ist.

8. Gewindetrieb nach Anspruch 5 oder 7, **dadurch gekennzeichnet, dass** das Federelement (14, 21) als Ring aus einem elastisch verformbaren Werkstoff ausgebildet ist.

## Claims

1. Ball screw drive having a spindle (1) and a nut (3) surrounding the spindle (1), as well as balls (4) arranged therebetween for rolling in a screw track (2) configured on the spindle (1) and in corresponding screw tracks (7, 9, 10, 12) that are configured on rings arranged within the nut (3), the screw track (7, 9, 10, 12) of one of the rings situated in the nut (3) comprising a deflecting region (13) for returning the balls (4) from a run-out end of a common turn of the screw tracks (2, 7, 9, 10, 12) to a run-in end of this turn, one screw track (7, 9, 10, 12) of each ring arranged in the nut (3) being made on a front end and the screw tracks (7, 9 and 10, 12 respectively) of two adjacent rings defining, together with the screw track (2) of the spindle (1), an endless circulation channel for the balls (4), **characterised in that** one of the rings arranged in the nut (3) is configured as a deflecting cage (8) that comprises on both its front ends, screw tracks (9, 10) having deflecting regions (13).

2. Screw drive according to claim 1, **characterised in that** the deflecting cage (8) is arranged within the nut (3) axially next to an insert ring (5) that comprises a screw track (7).

3. Screw drive according to claim 1, **characterised in that** the deflecting cage (8) is arranged within the nut (3) axially next to a bushing flange (11) of the nut (3), which bushing flange (11) comprises a screw track (12).

4. Ball screw drive having a spindle (1) and a nut (3) surrounding the spindle (1), as well as balls (4) arranged therebetween for rolling in a screw track (2) configured on the spindle (1) and in corresponding screw tracks (7, 12) that are configured on rings arranged within the nut (3), the screw track (7, 12) of one of the rings situated in the nut (3) comprising a deflecting region for returning the balls (4) from a run-out end of a common turn of the screw tracks (2, 7, 12) to a run-in end of this turn, one screw track (7, 12) of each ring arranged in the nut (3) being made on a front end and the screw tracks (7, 12) of two adjacent rings defining, together with the screw track (2) of the spindle (1), an endless circulation channel for the balls (4), **characterised in that** the nut (3) comprises a bushing flange (11) that acts as a ring and comprises a screw track (12), and an insert ring (5) comprising a screw track (7) is arranged within the nut (3) axially next to the ring-shaped bushing flange (11).

5. Screw drive according to claim 4, **characterised in that** the nut (3) is made without chip removal as a thin-walled bushing comprising a bent-over bushing flange (6) that closes the bushing and effects a clearance adjustment or pre-stress of the ball screw drive, and a spring element (14) is arranged in the nut (3) between the bent-over bushing flange (6) and the insert ring (5).

6. Ball screw drive having a spindle (18) and a nut (15) surrounding the spindle (18), as well as balls (4) arranged therebetween for rolling in a screw track (2) configured on the spindle (18) and in corresponding screw tracks (7) that are configured on rings arranged within the nut (3), the screw track (7) of one of the rings situated in the nut (15) comprising a deflecting region (20) for returning the balls (4) from a run-out end of a common turn of the screw tracks (7) to a run-in end of this turn, one screw track (7) of each ring arranged in the nut (15) being made on a front end and the screw tracks (7, 7) of two adjacent rings defining, together with the screw track (2) of the spindle (18), an endless circulation channel for the balls (4), the nut (15) being made without chip removal as a thin-walled bushing comprising a bent-over bushing flange (6) that closes the bushing and effects a clearance adjustment or pre-stress of the ball screw drive, **characterised in that** the rings arranged in the nut (15) are two insert rings (16, 17) that are configured as stamped discs.

7. Screw drive according to claim 6, **characterised in that** a spring element (21) is arranged in the nut (15) between the bent-over bushing flange (6) and an insert ring (17).

8. Screw drive according to claim 5 or 7, **characterised in that** the spring element (14, 21) is configured as a ring made out of an elastically deformable material.

## Revendications

1. Commande par vis à billes, ayant une broche (1) et un écrou (3) qui entoure la broche (1), ainsi que des billes (4) agencées entre ces deux pour rouler dans une piste filetée (2) configurée sur la broche (1) et dans des pistes filetées (7, 9, 10, 12) correspondantes configurées sur des anneaux agencés dans l'écrou (3), la piste filetée (7, 9, 10, 12) d'un des anneaux situés dans l'écrou (3) comprenant une région de renvoi (13) pour le retour des billes (4) à partir d'une extrémité de sortie d'une spire commune des pistes filetées (2, 7, 9, 10, 12) à l'extrémité d'entrée de cette spire, une piste filetée (7, 9, 10, 12) de chaque anneau agencé dans l'écrou (3) étant configurée sur un côté frontal, et les pistes filetées (7, 9 et 10, 12) de deux anneaux voisins définissant conjointement avec la piste filetée (2) de la broche (1), un canal de circulation sans fin pour les billes (4), **caractérisée en ce que** l'un des anneaux agencés dans l'écrou (3) est configuré sous la forme d'une cage de renvoi (8) qui comprend sur ses deux côtés frontaux, des pistes filetées (9, 10) ayant des régions de renvoi (13).

2. Commande par vis selon la revendication 1, **caractérisée en ce que** la cage de renvoi (8) est agencée à l'intérieur de l'écrou (3) axialement à côté d'un anneau d'insertion (5) qui comprend une piste filetée (7).

3. Commande par vis selon la revendication 1, **caractérisée en ce que** la cage de renvoi (8) est agencée à l'intérieur de l'écrou (3) axialement à côté d'un bord de douille (11) de l'écrou (3), lequel bord comprend une piste filetée (12)

4. Commande par vis à billes, ayant une broche (1) et un écrou (3) qui entoure la broche (1), ainsi que des billes (4) agencées entre ces deux pour rouler dans une piste filetée (2) configurée sur la broche (1) et dans des pistes filetées (7, 12) correspondantes configurées sur des anneaux agencés dans l'écrou (3), la piste filetée (7, 12) d'un des anneaux situés dans l'écrou (3) comprenant une région de renvoi pour le retour des billes (4) à partir d'une extrémité de sortie d'une spire commune des pistes filetées (2, 7, 12) à l'extrémité d'entrée de cette spire, une piste filetée (7, 12) de chaque anneau agencé dans l'écrou (3) étant configurée sur un côté frontal, et les pistes filetées (7, 12) de deux anneaux voisins définissant conjointement avec la piste filetée (2) de la broche (1), un canal de circulation sans fin pour les billes (4), **caractérisée en ce que** l'écrou (3) comprend un bord de douille (11) qui agit en anneau et comprend une piste filetée (12), et un anneau d'insertion (5) comprenant une piste filetée (7) est agencé à l'intérieur de l'écrou (3) axialement à côté du bord annulaire de douille (11).

5. Commande par vis selon la revendication 4, **caractérisée en ce que** l'écrou (3) est une douille à parois minces qui est fabriquée sans enlèvement de copeaux et comprend un bord de douille (6) rabattu qui ferme la douille et règle le jeu et la précontrainte de la commande par vis à billes, et à l'intérieur de l'écrou (3) est agencé, entre le bord de douille (6) rabattu et l'anneau d'insertion (5), un élément ressort (14).

6. Commande par vis à billes, ayant une broche (18) et un écrou (15) qui entoure la broche (18), ainsi que des billes (4) agencées entre ces deux pour rouler dans une piste filetée (2) configurée sur la broche (18) et dans des pistes filetées (7) correspondantes configurées sur des anneaux agencés dans l'écrou (15), la piste filetée (7) d'un des anneaux situés dans l'écrou (15) comprenant une région de renvoi (20) pour le retour des billes (4) à partir d'une extrémité de sortie d'une spire commune des pistes filetées (7) à l'extrémité d'entrée de cette spire, une piste filetée (7) de chaque anneau agencé dans l'écrou (15) étant configurée sur un côté frontal, et les pistes filetées (7, 7) de deux anneaux voisins définissant conjointement avec la piste filetée (2) de la broche (18), un canal de circulation sans fin pour les billes (4), l'écrou (15) étant une douille à parois minces qui est fabriquée sans enlèvement de copeaux et comprend un bord de douille (6) rabattu qui ferme la douille et règle le jeu et la précontrainte de la commande par vis à billes, **caractérisée en ce que** les anneaux agencés dans l'écrou (15) sont constitués de deux anneaux d'insertion (16, 17) configurés sous la forme de disques estampés.

7. Commande par vis selon la revendication 6, **caractérisée en ce que** dans l'écrou (15) est agencé, entre le bord de douille (6) rabattu et un anneau d'insertion (17), un élément ressort (21).

8. Commande par vis selon la revendication 5 ou 7, **caractérisée en ce que** l'élément ressort (14, 17) est configuré sous la forme d'anneau d'un matériau qui est élastiquement déformable.
